Europäisches Patentamt

European Patent Office

Office européen des brevets

(11) Veröffentlichungsnummer: **0 313 962**
**A1**

(12) # EUROPÄISCHE PATENTANMELDUNG

(21) Anmeldenummer: **88117311.6**

(22) Anmeldetag: **18.10.88**

(51) Int. Cl.⁴: **B62D 13/04**

(30) Priorität: **29.10.87 DE 3736627**

(43) Veröffentlichungstag der Anmeldung:
**03.05.89 Patentblatt 89/18**

(84) Benannte Vertragsstaaten:
**DE ES FR GB IT SE**

(71) Anmelder: **Bergische Achsenfabrik Fr. Kotz & Söhne**
**Am Ohlerhammer**
**D-5276 Wiehl 1(DE)**

(72) Erfinder: **Steiner Helmut Ing.**
**Freiherr-vom-Stein-Str. 1**
**D-5276 Wiehl(DE)**
Erfinder: **Hollaender Karl-Erich**
**Im Krahnoechel 9**
**D-5276 Wiehl(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

(54) **Lenkachse.**

(57) Eine Lenkachse für Fahrzeuganhänger, bei der die Räder (3) über Lenklager (2) und Lenkschenkel (4) an einem Achskörper (1) angelenkt sind und über Lenkhebel (5) und eine Spurstange (6) in Verbindung stehen, wobei die Lenklager (2) zwischen dem Achskörper (1) und den Lenkschenkeln (4) bei Geradeausfahrt auf einer geraden Verbindungslinie der Längsachse des Achskörpers (1) mit den Aufstandspunkten der Räder (3) liegen, zwischen den Lenkschenkeln (4) und dem Achskörper (1) eine aus Drucklagern (11,12) mit wellenförmigen Gleitflächen bestehende Stabilisierungseinrichtung angeordnet ist und jeder Lenkschenkel (4) auf einem im Achskörper (1) befestigten Lenkbolzen (7) gelagert ist, soll ein verbessertes Rückstellmoment für die Räder in Geradeausfahrtstellung haben. Hierzu sind die Lenkbolzen (7) in einer Fahrzeugquerebene um einen Spreizungswinkel (s) zur Senkrechten geneigt, ist der Durchstoßpunkt der verlängerten Achse jedes Lenkbolzens (7) durch den Boden um einen Rollradius (r) vom Mittelpunkt der Radaufstandsfläche beabstandet und sind zwischen jedem Lenkschenkel (4) und jedem Lenkbolzen (7) die Drucklager (11,12) in ihrer Ausgangslage für Geradeausfahrt stabilisierende Federn (16) angeordnet.

Fig.1

## Lenkachse

Gegenstand der Erfindung ist eine Lenkachse für Fahrzeuganhänger bei der die Räder über Lenklager und Lenkschenkel an einem Achskörper angelenkt sind und über Lenkhebel und eine Spurstange in Verbindung stehen, wobei die Lenklager zwischen dem Achskörper und den Lenkschenkeln bei Geradeausfahrt auf einer geraden Verbindungslinie der Längsachse des Achskörpers mit den Aufstandspunkten der Räder liegen, zwischen den Lenkschenkeln und dem Achskörper eine aus Drucklagern mit wellenförmigen Gleitflächen bestehende Stabilisierungseinrichtung angeordnet ist und jeder Lenkschenkel auf einem im Achskörper befestigten Lenkbolzen gelagert ist.

Es sind bereits verschiedene Ausführungsformen selbsttätig in Geradeausfahrt einspurender Lenkachsen bekannt geworden. Bei Nachlauflenkachsen liegen die Lenklager in einem Abstand vor den Aufstandpunkten der Räder, damit diese auch ohne eine Stabilisierungseinrichtung selbsttätig in die Geradeausfahrt einspuren. Der DE-PS 18 10 281 ist eine solche Nachlauflenkachse mit einer Stabilisierungseinrichtung zwischen dem Achskörper und der Spurstange entnehmbar, die aus einem zwischen dem Achskörper und einer geteilt ausgebildeten Spurstange angeordneten Gelenk besteht, welches eine Kurvenführung mit einer Kerbe aufweist, in die eine Führungsrolle ständig unter elastischer Vorspannung eingreift. Außerdem ist am Achskörper ein Schlepphebel gelagert, an dem auch die inneren Enden der Spurstangen angelenkt sind, auf dem die mit der Kurvenführung zusammenwirkende Führungsrolle gelagert ist. Diese bekannte Nachlauflenkachse ermöglicht erst dann einen Lenkeinschlag, wenn eine bestimmte Größe der Haftreibungskräfte zwischen den Rädern und der Fahrbahn diesen Einschlag erzwingt. Die bekannten Nachlauflenkachsen haben sich zwar im Betrieb bewährt, haben aber eine wartungsintensive Konstruktion mit vielen Verschleißteilen und erfordern eine Drucklufteinrichtung für die Betätigung der Stabilisierungseinrichtung.

Aus der US-PS 20 71 686 ist bereits eine gesteuerte Vorderachse für Kraftfahrzeuge bekannt geworden, welche die Merkmale einer gattungsgemäßen Lenkachse aufweist, wobei jedoch zur Verbindung der Lenkhebel ein Lenkgestänge und ein Lenkgetriebe statt einer Spurstange vorgesehen ist. Die Drucklager sind zwischen einer Halterung des Achskörpers für den Lenkbolzen und dem unteren Lenkschenkel angeordnet, wobei sie formschlüssig mit der Halterung bzw. im Lenkschenkel verbunden und auf dem Lenkbolzen geführt sind. Um ein Anheben des Achskörpers bei einem Lenkeinschlag zu ermöglichen, ist zwischen der Halterung des Achskörpers und dem oberen Lenkschenkel ein Freiraum ausgebildet, der ein einschieben des achskörperfesten Lenkbolzens in eine Buchse im oberen Lenkschenkel ermöglicht. Ein unbeabsichtigtes Anheben des Achskörpers durch während des Fahrbetriebes auftretene Impulse wird von weiteren Drucklagern verhindert, die sich in dem Freiraum zwischen Halterung und oberem Lenkschenkel befinden und mit geneigten Führungsflächen bei jedem Lenkungseinschlag aneinander anliegen. Diese Drucklager sind ebenfalls formschlüssig mit der Halterung bzw. mit dem oberen Lenkschenkel verbunden und auf dem Lenkbolzen geführt und liegen bei Geradeausfahrt mit Wellenbergen und bei maximalen Lenkungseinschlag mit Wellentälern aneinander an. Somit ist diese Kon struktion in Herstellung, Montage und Einstellung relativ aufwendig und bedarf infolge der Abnutzung der Drucklager häufiger Nachstellung. Außerdem ist das Rückstellmoment der vorbekannten Lenkachse relativ gering, so daß sie sich praktisch nur für fremdgelenkte Vorderachsen eignet.

Davon ausgehend liegt der Erfindung die **Aufgabe** zugrunde, eine einfacher konstruierte, montage- und wartungsfreundlichere Lenkachse mit einer verbesserten Stabilisierungseinrichtung zu schaffen, die größere Rückstellmomente aufweist und als Nachlauflenkachse für Fahrzeuganhänger verwendet werden kann.

Als technische **Lösung** wird dafür eine Lenkachse vorgeschlagen, bei der die Lenkbolzen in einer Fahrzeugquerebene um einen Spreizungswinkel zur Senkrechten geneigt sind, der Durchstoßpunkt der verlängerten Achse jedes Lenkbolzens durch den Boden um einen Rollradius vom Mittelpunkt der Radaufstandsfläche beabstandet ist und zwischen jedem Lenkschenkel und jedem Lenkbolzen die Drucklager in ihrer Ausgangslage für Geradeausfahrt stabilisierende Federn angeordnet sind.

Eine erfindungsgemäße Lenkachse kann des bereits bekannte Drucklager aus einer am Lenkschenkel befestigten unteren Druckscheibe und einer am Achskörper befestigten oberen Druckscheibe aufweisen, wobei die Stabilisierungseinrichtung koaxial zu dem in Achskörper z.B. durch Einschrumpfen befestigten Lenkbolzen angeordnet ist und die Gleitflächen der Druckscheiben wenigstens ein Paar ineinandergreifender Wellen aufweisen. Wenn bei Kurvenfahrt eine bestimmt Größe der Haftreibungskräfte zwischen den Rädern und der Fahrbahn einen Lenkeinschlag erzwingt, steigt die am Achskörper befestigte Druckscheibe auf der am Lenkschenkel befestigten Druckscheibe hoch und nimmt dabei den Achskörper mit. Die gewünschte Rückstellung der Räder in ihre Ausgangslage für Geradeausfahrt wird dabei durch das Zusammenwirken mehrerer Effekte erzielt.

Zum einen wirkt der Aufwärtsbewegung des Achskörpers die Achslast entgegen, so daß ein lastabhängiges Rückstellmoment in den Gleitflächen der Drucklager auftritt. Zum anderen bewirkt der Spreizungswinkel des Lenkbolzens zusammen mit dem Rollradiaus, das die Lenkschenkel, das gesamte Lenklager und der Achskörper bei einem Lenkeinschlag der Räder angehoben werden. Eine Komponente der in dem Mittelpunkt der Radaufstandsfläche angreifenden Hochkraft erzeugt hierbei ein weiteres Rückstellmoment um die Achse des Lenkbolzens. Außerdem unterstützen auch die zwischen Lenkschenkel und Lenkbolzen angeordneten Federn die aus Drucklagern bestehende Stabilisierungseinrichtung, weil die Federkraft einem gegenseitigen Verdrehen der Druckscheiben des Drucklagers entgegenwirkt. Die Federn sichern ein ausreichendes Rückstellmoment auch bei Leerfahrt. Schließlich kommt den Federn die Funktion zu, die Stabilisierungseinrichtung unter elastischer Vorspannung in ihrer Ausgangslage für Geradeausfahrt festzuhalten, damit ein unbeabsichtigtes Anheben des Achskörpers durch Stöße und ein Lenkeinschlag bei Geradeausfahrt vermieden werden können.

Nach einer praktischen Ausführungsform weisen die Gleitflächen der Drucklager vier ineinandergreifende Wellenberge und Wellentäler auf. Hierdurch werden ausreichende Lenkeinschläge der Räder erreicht, wenn die Gleitflächen fast mit ihren Wellenbergen aneinander anliegen. Außerdem ist hierdurch eine gleichmäßige Verteilung der Lagerkraft gegeben.

Der maximale Lenkeinschlag kann durch die Größe der Öffnung im Lenkschenkel begrenzt werden, in welche der Achskörper hineinragt und in welcher unter dem Achskörper die Stabilisierungseinrichtung angeordnet ist. Vorzugsweise ist dabei der maximale Hub des Achskörpers in jedem Lenkschenkel kleiner als die Höhe der Wellenberge an den Druckscheiben, so daß ein übermäßiger Lenkungseinschlag vermieden werden kann, bei dem die Wellenberger der Druckscheiben übereinandergleiten und ein Rückstellen der Räder für Geradeausfahrt verhindern.

Schnelle Lenkbewegungen der Räder können durch einen hydraulischen Zylinder verhindert werden, der zwischen dem Achskörper und der Spurstange angeordnet ist. Durch diese räumliche Anordnung wird für die Dämpfung der doppelte Weg des Lenkeinschlages ausgenutzt. Eine Lenkhilfe kann erzeugt werden, wenn der doppeltwirkende Lenkungsdämpfer durch pneumatische oder hyraulische Zylinder ersetzt wird.

Das selbsttätige Einspuren der Räder in Geradeausfahrt wird vorzugsweise durch Lenkbolzen gefördert, die in einer Fahrzeugquerebene um einen Spreizwinkel von 3° zur Senkrechten geneigt sind.

Eine nach dieser technischen Lehre ausgebildete Lenkachse hat den **Vorteil** einer sehr einfachen und äußerst wirksamen Konstruktion. Durch den Fortfall des Nachlaufes ist auch eine zusätzliche Rückfahrsperre entbehrlich, wie sie bei den bekannten Nachlauflenkachsen obligatorisch ist. Außerdem verkürzt sich durch den Fortfall des Nachlaufes die Gesamtlänge des Achskörpers. Schließlich entfallen auch die ein Spiel zwischen Achskörper und oberem Lenkschenkel ausgleichendem weiteren Drucklager der bekannten Lenkachse mit Drucklagereinrichtung. Damit ist eine Gewichtseinsparung verbunden. Durch das Zusammenwirken von Drucklagern, Spreizwinkel und Rollradius sind im Prinzip keine zusätzlichen manuellen, pneumatischen, hydraulischen oder mechanischen Rückstelleinrichtungen erforderlich. Die an der Lenkachse beteiligten Konstruktionsteile sind einfach herzustellen und äußerst wartungsfreundlich. Ein zusätzlicher Lenkungsdämpfer ist nur bei schnelllaufenden Fahrzeugen angezeigt, um ein Flattern der Lenkachse bei Geradeausfahrt zu vermeiden. Eine Minimierung der Konstruktionsteile durch den Fortfall des Nachlaufes und einer Rückfahrsperre sowie weiterer Drucklager wird infolge der lastabhängigen Rückstellung mit einer Optimierung der Wirksamkeit verbunden.

Weitere Einzelheiten und Vorteile ergeben sich aus der nachfolgenden Beschreibung der zugehörigen Zeichnungen, in denen zwei bevorzugte Ausführungsformen einer Lenkachse mit einer erfindungsgemäß ausgebildeten Stabilisierungseinrichtung schematisch dargestellt worden sind. In den Zeichnungen zeigen:

Fig. 1 eine Lenkachse in Ansicht von hinten;

Fig. 2 dieselbe Lenkachse in Draufsicht;

Fig. 3 das Lenklager, wobei sich die Stabilisierungseinrichtung in ihrer Ausgangslage für Geradeausfahrt befindet;

Fig. 4 dasselbe Lenklager, wobei sich die Stabilisierungseinrichtung in einem maximalen Lenkeinschlag von ca. 20° befindet;

Fig. 5 eine Stabilisierungseinrichtung in Draufsicht;

Fig. 6 eine obere Druckscheibe der Stabilisierungseinrichtung entlang der Linie VI-VI in Fig. 5 geschnitten;

Fig. 7 eine untere Druckscheibe der Stabilisierungseinrichtung entlang der Linie VII-VII in Fig. 5 geschnitten;

Fig. 8 eine Lenkachse mit Lenkungsdämpfer in ihrer Ausgangslage für Geradeausfahrt in Draufsicht;

Fig. 9 dieselbe Lenkachse bei Kurvenfahrt in Draufsicht.

Die dargestellte Lenkachse wird vor allem in Dreiachsaggregaten als hintere letzte Achse eingebaut, wenn die Achsabstände größer als 1 m werden, um bei Kurvenfahrt das Radieren der Reifen der hinteren Räder zu vermindern und ein besseres Einspuren des gesamten Dreiachsaggregates herbeizuführen.

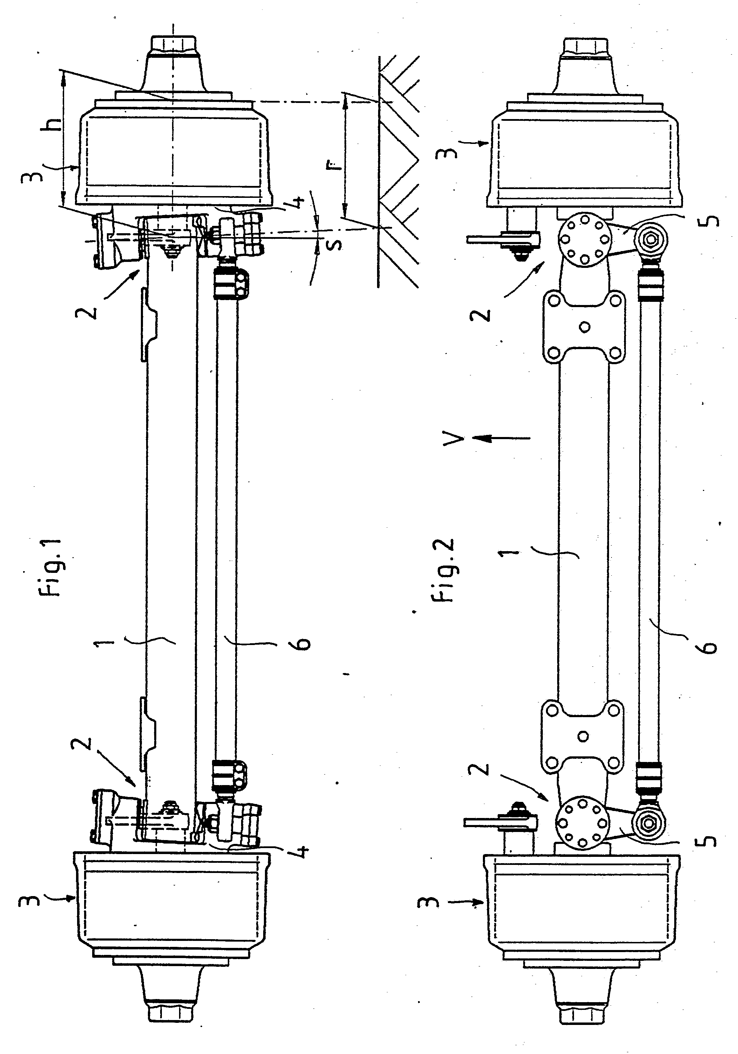

Die in der Fig. 1 dargestellte Lenkachse besteht aus einem Achskörper 1 mit Lenklagern 2 und Rädern 3, die mit Lenkschenkeln 4 am Achskörper 1 angelenkt sind und über mit den Lenkschenkel 4 verbundene Lenkhebel 5 und eine Spurstange 6 miteinander in Verbindung stehen.

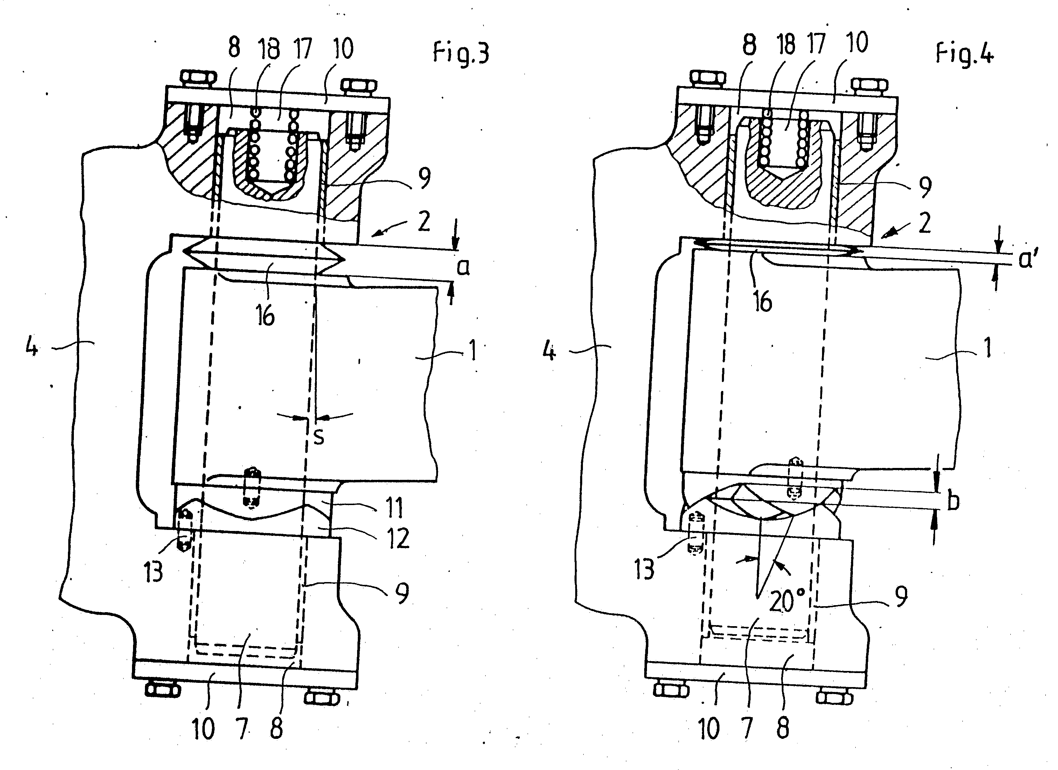

Die Drehachse des Lenklagers 2 wird gemäß Fig. 3 und 4 durch einen Lenkbolzen 7 definiert, der im Achskörper 1 befestigt, vorzugsweise eingeschrumpft, ist, etwa in der Mittellängsebene des Achskörpers 1 liegt und in einer, eine Symmetrieebene des Achskörpers 1 bildenden Fahrzeugquerebene zu einer Senkrechten in einem Spreizungswinkel s von 3° geneigt ist. Der Durchstoßpunkt der verlängerten Achse des Lenkbolzens 7 durch den Boden ist außerdem um einen Rollradius r vom Mittelpunkt der Radaufstandsfläche beabstandet. Die im Mittelpunkt der Radaufstandsfläche angreifende Hochkraft hat bei einer Lenkbewegung eine Komponente mit dem Hebelarm h um den Lenkbolzen 7.

Jeder Lenkschenkel 4 umgreift gabelförmig ein Ende des Achskörpers 1 und ist mit Bohrungen 8 versehen, in welche die aus dem Achskörper 1 herausragenden Enden des Lenkbolzens 7 eingreifen können. Die Bohrungen 8 sind mit Lagerbuchsen 9 für den Lenkbolzen 7 ausgekleidet und mit Deckeln 10 verschlossen.

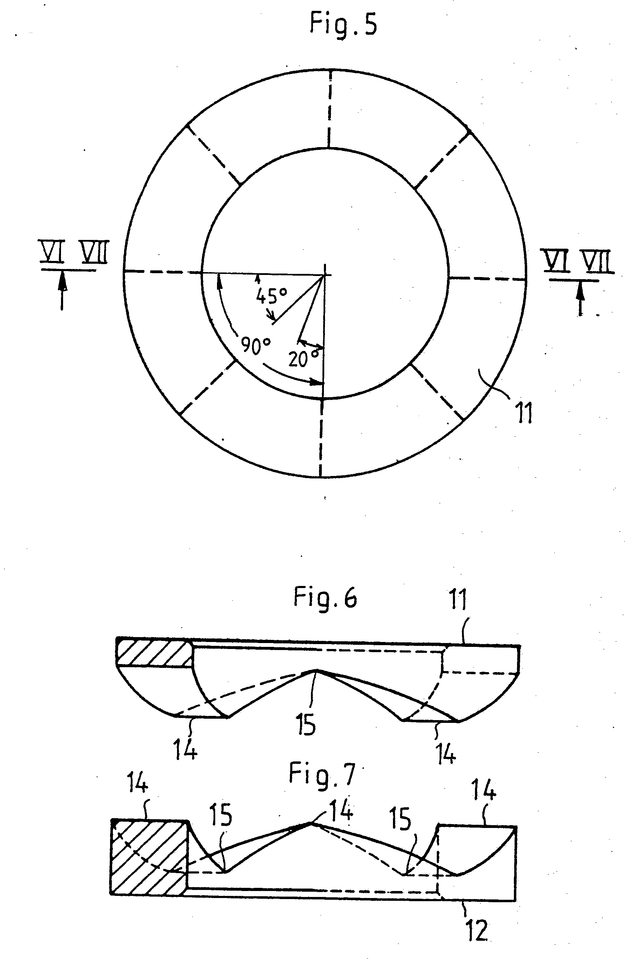

Zwischen dem Achskörper 1 und jedem Lenkschenkel 4 ist eine aus einer oberen Druckscheibe 11 und einer unteren Druckscheibe 12 bestehende Stabilisierungseinrichtung angeordnet. Die obere Druckscheibe 11 ist am Achskörper 1 und die untere Druckscheibe 12 am Lenkschenkel 4 befestigt. Die Befestigung kann durch Paßstifte 13 erfolgen, es ist aber auch möglich, die beiden Druckscheiben 11,12 anzuschweißen. Die aneinander anliegenden Gleitflächen der beiden Druckscheiben 11,12 sind wellenförmig ausgebildet und haben in dem dargestellten Ausführungsbeispiel (vgl. Fig. 5 bis 7) jeweils vier Wellenberge 14 und vier Wellentäler 15, die um einen Winkel von 45° gegeneinander verdreht ineinandergreifen. Diese Ausgangslage bei Geradeausfahrt in Vorwärtsfahrt V ist in der Fig. 3 dargestellt worden. Wenn die Haftreibungskräfte zwischen den Rädern 3 und der Fahrbahn eine bestimmte Größe überschreiten und einen Lenkeinschlag erzwingen steigen die Flanken der Wellenberge 14 an der oberen Druckscheibe 11 an den Flanken der Wellenberge 14 an der unteren Druckscheibe hoch bis das Bewegungsspiel des Achskörpers 1 in dem gabelförmigen Maul des Lenkschenkels 4 erschöpft ist. Diese Endlage bei einem Lenkeinschlag von 20° ist in der Fig. 4 dargestellt worden.

Aus einem Vergleich der beiden in den Fig. 3 und 4 dargestellten Lenkstellungen bei Geradeausfahrt und bei Kurvenfahrt ergibt sich, daß ein in der Ausgangslage gemäß Fig. 3 vorhandener maximale Hub a auf einen bei Kurvenfahrt gemäß Fig. 4 verbleibenden Resthub a' zusammenschrumpft, wobei die Hubdifferenz b von der Steigung der Wellenberge 14 und dem Verdrehwinkel der beiden Druckscheiben 11,12 abhängig ist. Der Resthub a' kann mit auf dem Lenkbolzen 7 zwischen dem Achskörper 1 und dem Lenkschenkel 4 angeordneten Federn 16 eingestellt werden, die als Tellerfedern ausgebildet und gleichzeitig auch als Dichtung benutzbar sind.

Damit die Stabilisierungseinrichtung bei geringer Achslast, also insbesondere bei Leerfahrt unter Vorspannung in ihrer Ausgangslage festgehalten wird, ist in einer Sacklochbohrung 17 des Lenkbolzens 7 eine Druckfeder 18 angeordnet, die sich am Deckel 10 Lenkschenkels 4 abstützt.

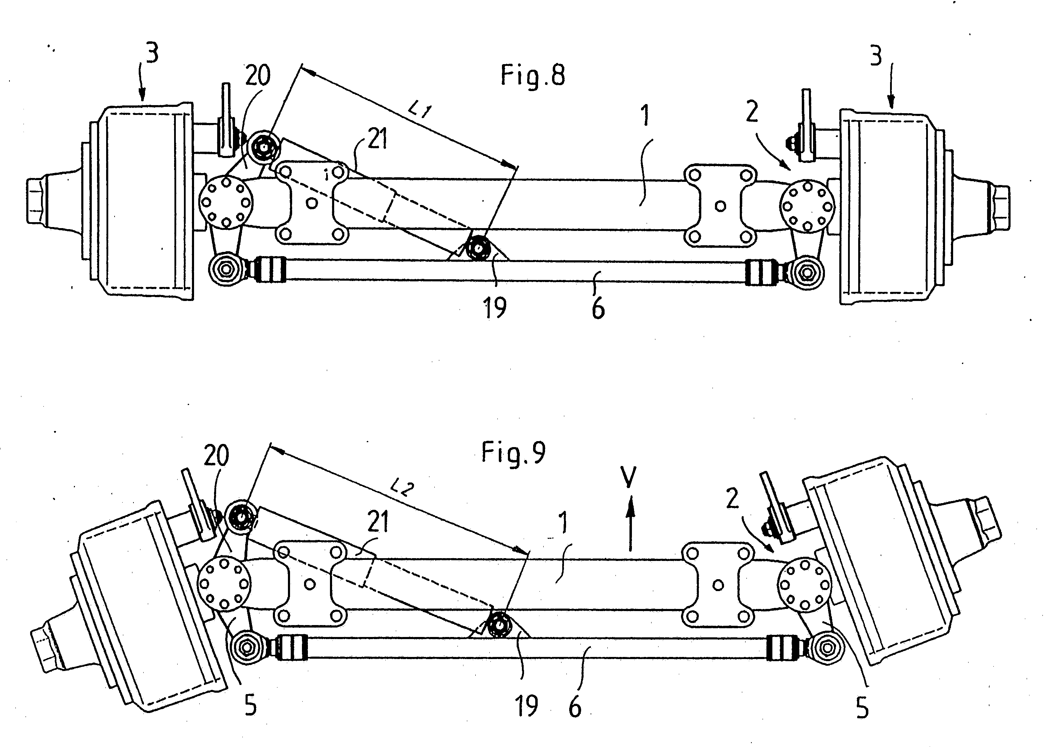

Bei der in den Fig. 8 und 9 dargestellten Ausführungsform der Lenkachse ist zwischen einer mit der Spurstange 6 verbundenen Platte 19 und einem Hebel 20 ein doppeltwirkender Lenkungsdämpfer 21 angeordnet. Der Hebel 20 weist in die entgegengesetzte Richtung vom Lenkhebel 5, so daß bei Kurvenfahrt der doppelte Weg des Lenkeinschlages für die Dämpfung zur Verfügung steht. Dies ergibt sich aus der Differenz der Dämpferlängen L1 bei Geradeausfahrt und Dämpferlängen L2 bei Kurvenfahrt.

Die dargestellte und beschriebene Lenkachse kann unabhängig von der Fahrtrichtung sowohl bei Vorwärtsfahrt als auch bei Rückwärtsfahrt einspuren, weil die Spur durch die vorgeschalteten starren Achsen vorgegeben wird. Wenn die Haftreibungskräfte zwischen den Rädern und der Fahrbahn bei Vorwärtsfahrt oder auch bei Rückwärtsfahrt das durch Stabilisierungseinrichtung, Federn, Spreizungswinkel und Rollradius bewirkte Rückstellmoment überwinden, wird ein Lenkeischlag erzwungen. Die Richtung des Lenkeinschlages bei Vorwärtsfahrt und beim Rangieren in Rückwärtsfahrt wird durch die vor- bzw. nachlaufenden starren Achsen vorgegeben.

**Bezugszeichenliste**

1 Achskörper
2 Lenklager

3 Rad
4 Lenkschenkel
5 Lenkhebel
6 Spurstange
7 Lenkbolzen
8 Bohrung
9 Lagerbuchse
10 Deckel
11 Druckscheibe (obere)
12 Druckscheibe (untere)
13 Paßstift
14 Wellenberg
15 Wellental
16 Feder
17 Sacklochbohrung
18 Druckfeder
19 Platte
20 Hebel
21 Lenkungsdämpfer
V Vorwärtsfahrt
a Hub
a' Resthub
b Hubdifferenz
h Hebelarm
L1 Dämpferlänge
L2 Dämpferlänge
r Rollradius
s Spreizungswinkel

## Ansprüche

1. Lenkachse für Fahrzeuganhänger, bei der die Räder (3) über Lenklager (2) und Lenkschenkel (4) an einem Achskörper (1) angelenkt sind und über Lenkhebel (5) und eine Spurstange (6) in Verbindung stehen, wobei die Lenklager (2) zwischen dem Achskörper (1) und den Lenkschenkeln (4) bei Geradeausfahrt auf einer geraden Verbindungslinie der Längsachse des Achskörpers (1) mit den Aufstandspunkten der Räder (3) liegen, zwischen den Lenkschenkeln (4) und dem Achskörper (1) eine aus Drucklagern (11,12) mit wellenförmigen Gleitflächen bestehende Stabilisierungseinrichtung angeordnet ist und jeder Lenkschenkel (4) auf einem im Achskörper (1) befestigten Lenkbolzen (7) gelagert ist,
**dadurch gekennzeichnet,**
daß die Lenkbolzen (7) in einer Fahrzeugquerebene um einen Spreizungswinkel (s) zur Senkrechten geneigt sind, daß der Durchstoßpunkt der verlängerten Achse jedes Lenkbolzens (7) durch den Boden um einen Rollradius (r) vom Mittelpunkt der Radaufstandsfläche beabstandet ist und daß zwischen jedem Lenkschenkel (4) und jedem Lenkbolzen (7) die Drucklager (11,12) in ihrer Ausgangslage für Geradeausfahrt stabilisierende Federn (16) angeordnet sind.

2. Lenkachse nach Anspruch 1, dadurch gekennzeichnet, daß die Gleitflächen der Drucklager (11,12) vier ineinandergreifende Wellenberge (14) und Wellentäler (15) aufweisen.

3. Lenkachse nach einem der Ansprüche 1 und 2, dadurch gekennzeichnet, daß der maximale Hub (a) des Achskörpers (1) in jedem Lenkschenkel (4) kleiner als die Höhe der Wellenberge (15) an den Druckscheiben (11,12) ist.

4. Lenkachse nach einem der Ansprüche 1 bis 3, dadruch gekennzeichnet, daß zwischen dem Achskörper (1) und der Spur stange (6) ein doppeltwirkender hyraulischer Zylinder (21) angeordnet ist.

5. Lenkachse nach einem der Ansprüche 1 bis 4, dadurch gekennzeichnet, daß die Lenkbolzen (7) in einer Fahrzeugquerebene um einen Spreizwinkel (s) von 3° zur Senkrechten geneigt sind.

Fig.1

Fig.2

29 531 I

Fig.3

Fig.4

EP 0 313 962 A1

29 531 II

## Fig.5

45°

90°

20°

11

VI VII

VI VII

## Fig.6

11

15

14                    14

## Fig.7

14          15          14          15          14

12

29 531 III

Fig.8

Fig.9

29 531 IV

**Europäisches Patentamt**

**EUROPÄISCHER RECHERCHENBERICHT**

Nummer der Anmeldung

EP 88 11 7311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 246 461 (BERGISCHE ACHSENFABRIK) * ganzes Dokument * --- | 1 - 3 | B 62 D 13/04 |
| A | DE-A-2 056 385 (GEORGI) * Anspruch 1; Figuren * --- | 1 | |
| A | FR-A- 953 736 (MICHELIN) * Figuren 1 - 4 * --- | 1 | |
| D,A | US-A-2 071 686 (FREDERICKSON) * ganzes Dokument * --- | 1, 2 | |
| A | DE-A-2 611 204 (TONARELLI) * Figur 1 * --- | 1 | |
| A | FAHRWERKTECHNIK 1 5. Auflage, 1982, Abschnitte 4, 8, Seiten 511, 512; Vogel Verlag Würzburg, J. REIMPELL: "Lenkungsrückstellung allgemein" * Figur 4.8/1 mit Bildtext * --- | 1, 5 | RECHERCHIERTE SACHGEBIETE (Int. Cl.4) |
| A | WO-A-8 302 096 (SEXTON ENTERPRISES) * Zusammenfassung; Figur 1 * ----- | 4 | B 62 D 13/00 B 62 D 7/00 |

Der vorliegende Recherchenbericht wurde für alle Patentansprüche erstellt

| Recherchenort | Abschlußdatum der Recherche | Prüfer |
|---|---|---|
| BERLIN | 19-01-1989 | KRIEGER P O |